# EUROPÄISCHE PATENTSCHRIFT

(11) **EP 1 922 499 B1**
(45) Veröffentlichungstag und Bekanntmachung des Hinweises auf die Patenterteilung: **18.11.2009**
(21) Anmeldenummer: 06755887.4
(22) Anmeldetag: 07.03.2006
(51) Int. Cl.: F16H 57/12

(54) **ZAHNRADGETRIEBE**
TOOTHED GEARING
ENGRENAGE

(30) Priorität: 15.03.2005 DE 202005012226 U
(43) Veröffentlichungstag der Anmeldung: 21.05.2008
(73) Patentinhaber: Linsinger Maschinenbau Gesellschaft m.b.H., 4662 Steyrermühl (AT)
(72) Erfinder: NEUBAUER, Walter, AT-4694 Ohlsdorf (AT); KNOLL, Johann, AT-4861 Schörfling (AT)
(86) Internationale Anmeldenummer: PCT/IB2006/001283
(87) Internationale Veröffentlichungsnummer: WO 2006/097855

(56) Entgegenhaltungen:
- DE-A1- 4 343 484
- DE-A1- 19 614 470
- US-A- 2 533 043
- US-A- 3 397 590
- US-A- 3 478 514
- US-A1- 2003 015 052
- PATENT ABSTRACTS OF JAPAN Bd. 014, Nr. 144 (M-0951), 19. März 1990 (1990-03-19) & JP 02 008544 A (MITSUBISHI ELECTRIC CORP), 12. Januar 1990 (1990-01-12)

## Beschreibung

Die Erfindung betrifft ein Zahnradgetriebe für ein drehangetriebenes Werkzeug, inbesondere Kreissägeblatt, Fräswerkzeug oder dergleichen nach dem Oberbegriff des Patentanspruches 1.

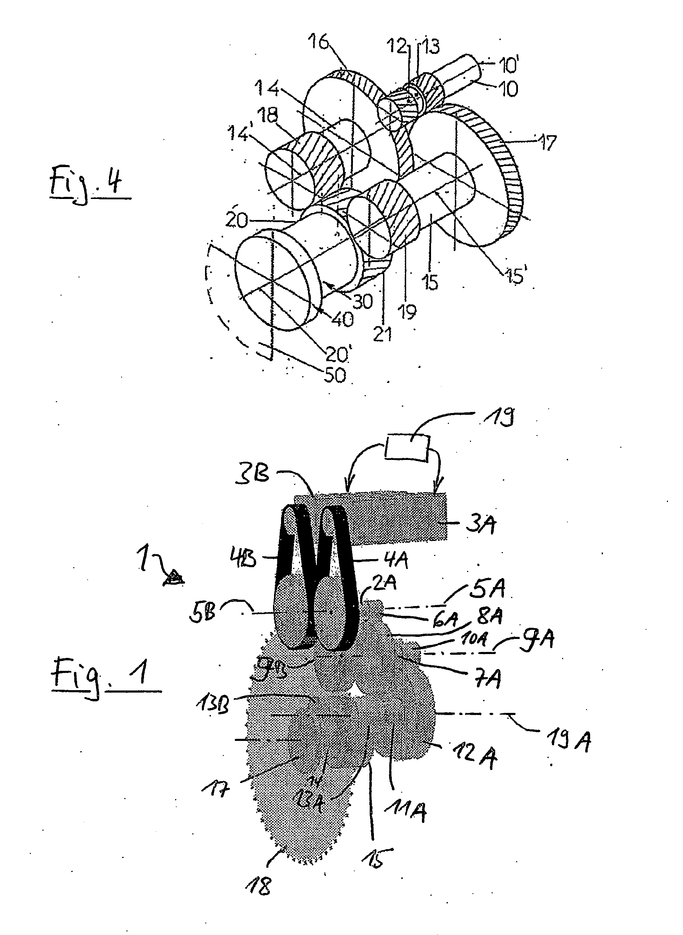

Ein derartiges Zahnradgetriebe ist aus der gattungsbildenden DE 43 43 484 C2 desselben Patentanmelders bekannt. Dieses bekannte Getriebe, welches vorzugsweise zum Antrieb einer Kreisäge verwendet wird, ist in Fig. 4 dargestellt, und weist eine Antriebswelle 10 auf, welche axial beweglich gelagert ist. Die Antriebswelle 10 besitzt an ihrem einen Wellenende, bezogen zur Achse 10', doppeltschrägverzahnte Lastverteilungszahnräder 12, 13, welche gemäß Fig. 4 um einen vorgegebenen Abstand auf der Wellenachse 10' befestigt sind, so dass jeweils ein Lastverteilungszahnrad 12, 13 ungehindert mit jeweils einem passend schrägverzahnten, an je einem Ende einer Übertragungswelle 14, 15 drehfest angeordneten Zwischenrad 16, 17 in Eingriff bringbar ist bzw. miteinander kämmen kann. Der erwähnte Abstand zwischen den Lastverteilungszahnrädern 12 und 13 wird dabei möglichst klein gewählt, um unerwünschte Torsionen in diesem Teil der Antriebswelle 10 zu vermeiden. Am jeweils anderen Ende der Übertragungswellen 14, 15 sind schräg verzahnte Antriebsritzel 18, 19 angeordnet, die mit einem auf einer Abtriebswelle 20 angeordneten Abtriebsrad 21 kämmen. Die Abtriebswelle 20 bildet einen Teil einer Spindel 30 einer Kreissägemaschine und besitzt einen Flansch 40 zur Befestigung eines schematisch mit dem Bezugszeichen 50 angedeuteten Sägeblattes. Bei diesem bekannten Getriebe gemäß Fig. 4 wird die Antriebswelle 10 zur Erzeugung einer Vorspannkraft, die als gewünschte Vorspannung über die Schrägverzahnungen der Zahnradpaarungen zur Spielfreiheit im gesamten Getriebe führt, mittels eines regelbaren Hydraulikantriebes mit einer Axialkraft beaufschlagt. Hierfür steht z. B. die Antriebswelle 10 mit dem Kolben eines (nicht näher dargestellten) Hydraulikzylinders in Verbindung, wobei die Krafteinwirkung auf die Antriebswelle 10 in axialer Richtung durch die Verdrängung des Kolbens im Zylinder gesteuert werden kann. Die auf der axialbeweglich gelagerten, mit einer einstellbaren axialen Vorspannkraft beaufschlagten Antriebswelle 10 angeordneten Lastverteilungszahnräder 12, 13, die Zwischenräder 16, 17, die Antriebsritzel 18, 19 und das mindestens eine Abtriebsritzel 21 bilden ein spielfreies Lastverteilgetriebe mit einem Mehrfachritzelantrieb der Abtriebswelle 20. Im Zusammenwirken mit der axialen verschiebbaren Lagerung der Antriebswelle 19 der Einwirkung der axialen Vorspannkraft mit der Hydraulikeinheit und der gegenläufig bzw. doppelschräg verzahnten Lastverteilungszahnräder 12, 13 entstehen im Lastverteilgetriebe entgegengesetzt gerichtete, sich im Wesentlichen gegenseitig aufhebende Axialkraftkomponenten. Diese Axialkraftkomponenten üben Kräfte auf die kämmenden Ritzelzahnflanken derart aus, dass das Getriebe insgesamt spielfrei ist und ein Zahnschlagen bei wechselnder Last vermieden wird.

Aus der DE 196 14 470 A1 ist ein Verfahren zur aktiven Dämpfung von Drehungleichförmigkeiten oder Schwingungen bei der spanenden Bearbeitung oder beim Sägen fester Werkstoffe bekannt, bei dem vermittels einem Linearmotor auf die Antriebswelle zusätzlich zum Hauptantrieb phasenrichtig korrigierende Drehmomente so aufgeprägt werden, dass etwaige Drehungleichförmigkeiten oder Schwingungen reduziert werden sollen. Der Linearmotor ist hierbei entweder auf der Antriebswelle getrennt vom eigentlichen Antriebsmotor angeordnet, oder er ist als Hauptantriebsmotor genutzt. Es ist ein Drehzahlsensor vorgesehen, der über eine Steuerelektronik den Linearmotor zeit- und phasenrichtig ansteuert.

Das Problem beim Kreissägen besteht allgemein darin, dass nur etwa ein Drittel des Werkzeugdurchmessers, d.h. des Sägeblattdurchmessers für die Bearbeitung des Werkstückes genutzt werden kann. Große Werkstückabmessungen erfordern entsprechend hohe Sägeblattdurchmesser. Da die Schnittgeschwindigkeit durch die Eigenschaft des Schneidstoffes nach oben begrenzt ist, müssen außerordentlich hohe Getriebeübersetzungen ins Langsame realisiert werden. Aufgrund der hohen zu übertragenden Schnittmomente werden hierfür zweckmäßigerweise Stirnradgetriebe mit einer entsprechend hohen Anzahl an Getriebewellen und Übersetzungsstufen eingesetzt, wie es die Fig. 4 beispielhaft zeigt.

Das in Fig. 4 dargestellte bekannte Getriebe ist im Prinzip in der Lage, auch bei sich stark und schnell ändernden Lastgrößen ein hohes Drehmoment ohne Zahnflankenschlagen zu übertragen; allerdings stellt sich insbesondere bei sehr großen, im Stand der Technik bislang nicht bekannten bzw. verwendeten Kreissägendurchmessern von 2 m und sogar darüber das Problem, dass aufgrund der sehr hohen zu übertragenden Drehmomente des Getriebeantriebes auf die Kreissäge vor allem zu Beginn bzw. zum Ende des Sägevorganges, bei dem nur ein geringer Teil bzw. eine geringe Anzahl von Sägeblattzähnen mit dem zu bearbeitenden Werkstück in Eingriff gelangen, äußerst große Belastungsspitzen auftreten, d.h. ein kurzzeitiges Ansteigen und Abfallen einer auf das Sägeblatt, bedingt durch die Schnittführung einwirkenden, veränderlichen Kraft, die, wenn überhaupt, so nur unzureichend gedämpft wird. Hierbei heben sich die im Eingriff befindlichen Zahnflanken der entsprechenden Zahnradpaarungen kurzzeitig ab bzw. schlagen nach Entlastung gegeneinander. Die dadurch im Getriebe entstehenden Lastschwingungen werden über die Sägewelle auf das Sägeblatt, unter Umständen durch Resonanzbildung sogar verstärkt, zurück übertragen, und können durch Rückkopplung die Schnittqualität verschlechtern, und der Verschleiß des Sägeblattes erhöht sich. Bei einer extremen Spitzenbelastung können darüber hinaus Schäden an den Zahnflanken des Getriebes sowie ein Bruch des Sägewerkzeuges auftreten.

Ausgehend vom Stand der Technik gemäß der DE 43 43 484 C2 liegt der Erfindung die Aufgabe zugrunde, ein Zahnradgetriebe für ein drehangetriebenes Werkzeug, inbesondere Kreissägen- bzw. Fräswerkzeug oder dergleichen anzugeben, welches über eine hohe Torsionssteifigkeit und einen einfachen Aufbau verfügt, wobei weiterhin das Getriebe in der Lage sein soll, auch bei sich stark und schnell ändernden Lastgrößen ein hohes Drehmoment ohne Zahnflankenschlagen zu übertragen, und andererseits übermäßig große Belastungsspitzen zu Beginn bzw. zum Ende des Sägevorganges, bei dem zunächst nur ein geringer Teil bzw. eine geringe Anzahl von Sägeblattzähnen mit dem zu bearbeitenden Werkstück in Eingriff gelangen, wirksam zu vermeiden, und zwar selbst bei sehr großen, im Stand der Technik bislang nicht bekannten bzw. verwendeten Kreissägendurchmessern von 2 m und sogar darüber.

Diese Aufgabe wird durch die kennzeichnenden Merkmale des Patentanspruches im Zusammenhang mit den Merkmalen des Oberbegriffs gelöst.

Erfindungsgemäß ist ein Zahngetriebe für ein drehangetriebenes Werkzeug, insbesondere Kreissägewerkzeug, Fräswerkzeug oder dergleichen, vorgesehen mit wenigstens einer Antriebswelle mit zumindest einem darauf drehfest angeordneten Lastverteilungszahnrad, und mit wenigstens einer Übertragungswelle mit zumindest einem auf einem Übertragungswellenende drehfest angeordneten Zwischenrad, das mit dem zumindes einem Lastverteilungszahnrad in Eingriff steht, und mit wenigstens einem auf dem gegenüberliegenden Übertragungswellenende drehfest angeordneten Antriebsritzel, und einer Abtriebswelle mit daran verbundenen Mitteln zur Kraftübertragung und Befestigung des Werkzeuges, welches Getriebe sich nach der Erfindung dadurch auszeichnet, dass wenigstens zwei unabhängig voneinander angetriebene Antriebswellen vorgesehen sind, wobei jede Antriebswelle mit einem mechanischen, elektromechanischen, hydraulischen, pneumatischen oder hydropneumatischen Antrieb in Verbindung steht, wobei die wenigstens zwei Antriebe bzw. Antriebswellen über eine Steuervorrichtung dergestalt miteinander gekoppelt sind, dass der eine Antrieb bzw. die eine Antriebswelle beim Anlaufen und beim Ablaufen des Getriebes durch den anderen Antrieb bzw. die andere Antriebswelle im Sinne einer Leistungsverminderung gebremst bzw. gedämpft wird, und nach Beendigung der Anlaufphase oder vor dem Beginn der Ablaufphase das vollständige Drehmoment der beiden Antriebe auf das Zahnradgetriebe übertragbar ist.

Die Bezeichnung "Anlaufphase" bezieht sich hierbei auf den normalerweise nur wenige Sekunden dauernden Beginn des Sägevorganges, bei dem zunächst nur ein geringer Teil bzw. eine geringe Anzahl von Sägeblattzähnen mit dem zu bearbeitenden Werkstück in Eingriff gelangen. Analog bedeutet die Bezeichnung "Ablaufphase" den ebenfalls in der Regel nur wenige Sekunden dauernden Zeitabschnitt kurz vor Beendigung des Sägevorganges, bei dem nur mehr ein geringer Teil bzw. eine geringe Anzahl von Sägeblattzähnen mit dem restlich zu bearbeitenden Werkstück in Eingriff steht.

Bei einer bevorzugten Ausbildung der Erfindung ist vorgesehen, dass die Steuervorrichtung die zumindest zwei Antriebe bzw. die zumindest zwei Antriebswellen beim Anlaufen und/oder beim Ablaufen des Getriebes zeit- und/oder wegabhängig.steuert.

Dem Prinzip der Erfindung folgend ist von Vorteil vorgesehen, dass die Steuervorrichtung durch eine Master-Slave-Kopplung der beiden Antriebe bzw. der beiden Antriebswellen ausgebildet ist, wobei der eine Antrieb bzw. die eine Antriebswelle als Master, und der andere Antrieb bzw. die andere Antriebswelle als Slave der das Getriebe steuernden Steuervorrichtung ausgebildet ist.

Der Grundgedanke der Erfindung besteht darin, durch ein spezielles Lastverteilgetriebe mit einem verdoppelten Antrieb zum einen die geforderten hohen Drehmomente für den Antrieb von drehgetriebenen Werkzeugen mit sehr großen Durchmessern zu erreichen, wobei auch bei sich stark und schnell ändernden Lastgrößen ein hohes Drehmoment ohne Zahnflankenschlagen übertragen werden kann, und welches zum anderen über einen konstruktiv vergleichsweise einfachen Aufbau verfügt, und andererseits in der Lage ist, übermäßig große Belastungsspitzen zu Beginn bzw. zum Ende des Sägevorganges, bei dem zunächst nur ein geringer Teil bzw. eine geringe Anzahl von Sägeblattzähnen mit dem zu bearbeitenden Werkstück in Eingriff gelangen, wirksam zu vermeiden, und zwar selbst bei sehr großen, im Stand der Technik bislang nicht bekannten bzw. verwendeten Kreissägendurchmessern von 2 m und sogar darüber.

Weitere Vorteile, Zweckmäßigkeiten und Weiterbildungen der Erfindung ergeben sich aus den weiteren Unteransprüchen.

Weitere Einzelheiten ergeben sich aus der nachfolgenden Beschreibung eines Ausführungsbeispieles anhand der Zeichnung. Es zeigt:
- Fig. 1, 3: perspektivische Ansichten eines nach dem Ausführungsbeispiel der Erfindung bevozugt verwendeten Getriebes für eine Kreissägemaschine;
- Fig. 2: eine schematische Vorderansicht des Ausführungsbeispieles; und
- Fig. 4: eine perspektivische Ansicht eines bekannten Getriebes für eine Kreissägemaschine.

Das in den Figuren 1 bis 3 dargestellte bevorzugte Ausführungsbeispiel der Erfindung umfasst ein Getriebe 1 mit zwei geeignet gelagerten Antriebswellen 2A und 2B, welche unabhängig voneinander jeweils mittels Motoren 3A und 3B und einer Übersetzung 4A und 4B angetrieben sind. Es sind somit wenigstens zwei unabhängig voneinander angetriebene Antriebswellen 2A, 2B vorgesehen, wobei jede Antriebswelle mit einem mechanischen, elektromechanischen, hydraulischen, pneumatischen oder hydropneumatischen Antrieb 3A, 3B in Verbindung steht, und die wenigstens zwei Antriebe 3A, 3B bzw. Antriebswellen 2A, 2B über eine (in den Figuren lediglich schematisch angedeutete) Steuervorrichtung 19 dergestalt miteinander gekoppelt sind, dass der eine Antrieb 3A bzw. die eine Antriebswelle 2A beim Anlaufen und beim Ablaufen des Getriebes 1 durch den anderen Antrieb 3B bzw. die andere Antriebswelle 2B im Sinne einer Leistungsverminderung gebremst bzw. gedämpft wird, und nach Beendigung der Anlaufphase oder vor dem Beginn der Ablaufphase das vollständige Drehmoment der beiden Antriebe 3A, 3B auf das Zahnradgetriebe 1 übertragbar ist.

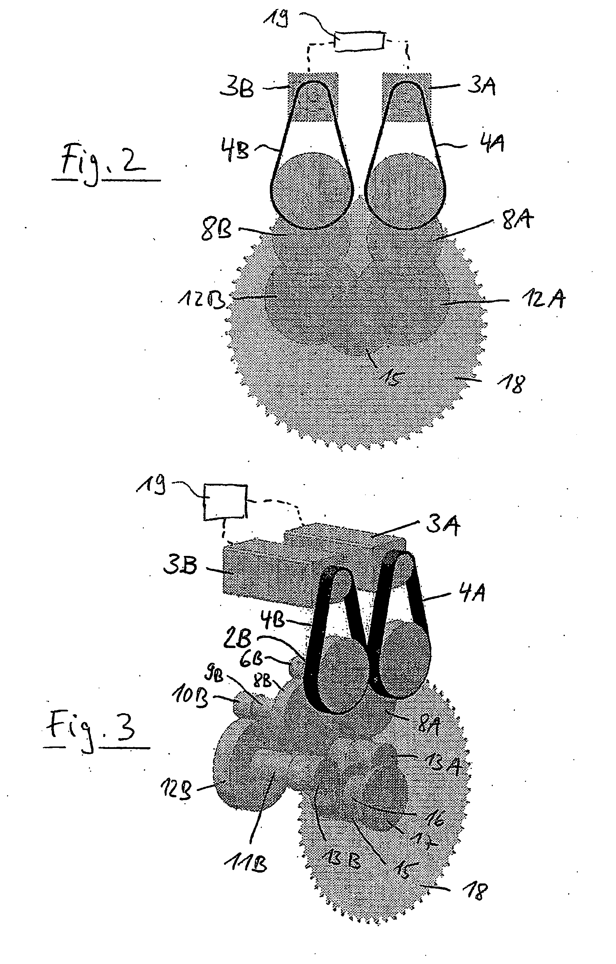

Die Antriebswellen 2A, 2B besitzen an ihren einen Wellenenden, bezogen jeweils zu den Achsen 5A, 5B, geradlinigverzahnte Lastverteilungszahnräder 6A, 6B, welche auf der Wellenachse 5A bzw. 5B befestigt sind, so dass jeweils ein Lastverteilungszahnrad 6A, 6B ungehindert mit jeweils einem passend geradlinigverzahnten, an je einem Ende einer Übertragungswelle 7A, 7B drehfest angeordneten Zwischenrad 8A, 8B in Eingriff bringbar ist bzw. miteinander kämmen kann. Die Übertragungswellen 7A, 7B besitzen an ihren einen Wellenenden, bezogen jeweils zu den Achsen 9A, 9B, weitere geradlinigverzahnte Lastverteilungszahnräder 10A, 10B, welche gemäß Fig. 2 oder 4 jeweils auf der Wellenachse 9A bzw. 9B befestigt sind, so dass jeweils ein Lastverteilungszahnrad 10A, 10B ungehindert mit jeweils einem passend geradlinigverzahnten, an je einem Ende einer Übertragungswelle 11A, 11B drehfest angeordnete weitere Zwischenräder 12A, 12B in Eingriff bringbar ist bzw. miteinander kämmen kann. Die Übertragungswellen 11A, 11B besitzen an ihren einen Wellenenden, bezogen jeweils zu den Achsen 19A, 19B, weitere geradlinigverzahnte Lastverteilungszahnräder bzw. Antriebsritzel 13A, 13B, welche gemäß Fig. 1 oder 3 jeweils auf der Wellenachse 19A bzw. 19B befestigt sind, und die mit einem auf einer Abtriebswelle 14 angeordneten Abtriebsrad 15 kämmen. Die Abtriebswelle 14 bildet einen Teil einer Spindel 16 einer Kreissägemaschine und besitzt einen Flansch 17 zur Befestigung eines schematisch mit dem Bezugszeichen 18 angedeuteten Sägeblattes.

## Patentansprüche

1. Zahnradgetriebe für ein Kreissägewerkzeug (18), Fräswerkzeug oder dergleichen, mit wenigstens einer Antriebswelle (2A, 2B) mit zumindest einem darauf drehfest angeordneten Lastverteilungszahnrad (6a, 6B), und mit wenigstens einer Übertragungswelle (7A, 7B) mit zumindest einem auf einem Übertragungswellenende drehfest angeordneten Zwischenrad (8A, 8B), das mit dem zumindest einem Lastverteilungszahnrad (6A, 6B) in Eingriff steht, und mit wenigstens einem auf dem gegenüberliegenden Übertragungswellenende drehfest angeordneten Antriebsritzel (13A, 13B), und einer Abtriebswelle (14) mit daran verbundenen Mitteln (17) zur Kraftübertragung und Befestigung des Werkzeuges (18),
**dadurch gekennzeichnet,**
**dass** wenigstens zwei unabhängig voneinander angetriebene Antriebswellen (2A, 2B) vorgesehen sind, wobei jede Antriebswelle mit einem mechanischen, elektromechanischen, hydraulischen, pneumatischen oder hydropneumatischen Antrieb (3A, 3B) in Verbindung steht, und die wenigstens zwei Antriebe (3A, 3B) bzw. Antriebswellen (2A, 2B) über eine Steuervorrichtung (19) dergestalt miteinander gekoppelt.sind, dass der eine Antrieb bzw. die eine Antriebswelle beim Anlaufen und beim Ablaufen des Getriebes durch den anderen Antrieb bzw. die andere Antriebswelle im Sinne einer Leistungsverminderung gebremst bzw. gedämpft wird, und nach Beendigung der Anlaufphase oder vor dem Beginn der Ablaufphase das vollständige Drehmoment der beiden Antriebe (3A, 3B) auf das Zahnradgetriebe (1) übertragbar ist.

2. Zahnradgetriebe nach Anspruch 1, **dadurch gekennzeichnet, dass** die Steuervorrichtung (19) die zumindest zwei Antriebswellen beim Anlaufen und beim Ablaufen des Getriebes (1) zeit- und/oder wegabhängig steuert.

3. Zahnradgetriebe nach Anspruch 1 oder 2, **dadurch gekennzeichnet, dass** die Steuervorrichtung (19) durch eine Master-Slave-Kopplung der beiden Antriebe (3A, 3B) bzw. der beiden Antriebswellen (2A, 2B) ausgebildet ist, wobei der eine Antrieb bzw. die eine Antriebswelle als Master, und der andere Antrieb bzw. die andere Antriebswelle als Slave der das Getriebe (1) steuernden Steuervorrichtung (19) ausgebildet ist.

4. Zahnradgetriebe nach einem der vorhergehenden Ansprüche, **dadurch gekennzeichnet, dass** die Wellenachsen (5A, 5B) der Antriebswellen (2A, 2B), sowie die Wellenachsen der Übertragungswellen (10A, 10B, 13A, 13B) und die Abtriebswelle (14) parallel zueinander angeordnet sind.

5. Zahnradgetriebe nach einem der vorhergehenden Ansprüche, **dadurch gekennzeichnet, dass** eine Zahnradpaarung zwischen den Antriebsritzeln (13A, 13B) und dem Abtriebsrad (15) jeweils als Außenradpaar oder als Innenradpaar ausgebildet ist.

6. Zahnradgetriebe nach einem der vorhergehenden Ansprüche, **dadurch gekennzeichnet, dass** eine Zahnradpaarung zwischen den Lastverteilungszahnrädern und den Zwischenrädern jeweils als Außenradpaar oder als Innenradpaar ausgebildet ist.

7. Zahnradgetriebe nach einem der vorhergehenden Ansprüche, **dadurch gekennzeichnet, dass** auf den Antriebswellen (2A, 2B) , jeweils ein gegenläufig schräg verzahntes oder geradliniges Lastverteilungszahnrad (6A, 6B) angeordnet ist, wobei jedes der Lastverteilungszahnräder mit jeweils einem an einem Ende von zwei Übertragungswellen (7A, 7B; 11A, 11B) angeordneten Zwischenrad (8A, 8B; 12A, 12B) kämmt .

## Claims

1. Toothed gear for a circular sawing tool (18), milling tool or similar, with at least one drive shaft (2A, 2B) comprising at least one load distribution gearwheel attached torsionally fixed (6A, 6B) and comprising at least one transmission shaft (7A, 7B) with at least one on a transmission shaft end torsionally fixed idle wheel (8A, 8B), that is in engagement with said at least one load distribution gearwheel (6A, 6B), and comprising at least one on the opposite transmission shaft end torsionally fixed drive pinion (13A, 13B), and a driven shaft (14) with thereon connected means (17) for power transmission and fastening of said tool (18),
**characterized in that**
at least two independently driven drive shafts (2A, 2B) are provided, whereby each drive shaft is coupled to a mechanic, electro-mechanic, hydraulic or hydro pneumatic drive (3A, 38), and said at least two drives (3A, 3B) and/or drive shafts (2A, 2B) are coupled via a control device (19) such that said one drive and/or said one drive shaft during starting and stopping of the gear are braked and/or damped by said other drive and/or other drive shaft in terms of decrease of performance, and after completion of the starting period or before start of the stopping period the full torque of both drives (3A, 3B) is transmittable to the toothed gear (1).

2. Toothed gear according to claim 1, wherein said control device (19) controls timely and/or path dependent said at least two drive shafts during starting and stopping of the gear (1).

3. Toothed gear according to claim 1 or 2, wherein said control device (19) is comprised by a master-slave-coupling of both drives (3A, 3B) and/or of both drive shafts (2A, 2B), whereby said one drive and/or said other drive shaft is provided as master and said other drive and/or said other drive shaft is provided as slave of said control device (19) controlling said gear.

4. Toothed gear according to one of the foregoing claims, wherein said shaft axis (5A, 5B) of the drive shafts (2A, 2B), as well as said shaft axis of the transmission shafts (10A, 10B, 13A, 13B) and said driven shaft (14) are arranged parallel to each other.

5. Toothed gear according to one of the foregoing claims, wherein a gear pair between the drive pinions (13A, 138) and said driven gear (15) is each formed as external gear pair or as internal gear pair.

6. Toothed gear according to one of the foregoing claims, wherein a gear pair between said load distribution gearwheel and said idle wheels is each formed as external gear pair or as internal gear pair.

7. Toothed gear according to one of the foregoing claims, wherein on the drive shafts (2A, 2B) each one opposed inclined toothed or straight load distribution gearwheel (6A, 6B) is arranged, whereby each of said load distribution gearwheels is engaging with each one idle wheel (8A, 8B; 12A, 12B) arranged on one end of two transmission shafts (7A, 7B; 11A, 11B).

## Revendications

1. Engrenage destiné à un outil pour scies circulaires (18), un outil de fraisage ou similaire, constitué de:
au moins un arbre moteur (2A, 2B) muni d'au moins une roue dentée de répartition de charge (6A, 6B), solidaire en rotation de ce dernier,
- au moins un arbre de transmission (7A, 7B) pourvu d'au moins une roue intermédiaire (8A, 8B), solidaire en rotation sur l'extrémité de l'arbre de transmission - cette ladite roue étant engrenée sur la roue dentée de répartition de charge (6A, 6B),
- au moins un pignon d'entraînement (13A, 13B) monté sur l'extrémité d'arbre de transmission sur le côté opposé d'une manière solidaire en rotation,
- et avec un arbre moteur (14) sur lequel se trouvent des moyens (17) pour la transmission de puissance et la fixation des outils (18),
**caractérisé en ce que:**
- au moins deux arbres moteurs (2A, 2B) entrainés indépendamment l'un de l'autre sont prévus, chaque arbre moteur est raccordé à un dispositif d'entraînement mécanique, électromécanique, hydraulique, pneumatique ou hydropneumatique (3A, 3B) et
- au moins les deux dispositifs d'entraînement (3A, 3B) resp. les arbres moteurs (2A, 2B) sont accouplés l'un à l'autre au moyen d'un dispositif de commande (19) de sorte que l'un des dispositifs d'entraînement resp. l'un des arbres moteurs est freiné ou bien amorti par l'autre dispositif de commande lors du démarrage et de l'arrêt de l'engrenage de sorte qu'une réduction de puissance puisse avoir lieu, après la fin de la phase de démarrage ou avant le début de la phase d'arrêt le couple entier de deux dispositifs d'entraînement (3A, 3B) est transmissible à l'engrenage (1 ).

2. Engrenage selon la revendication 1, **caractérisé en ce que** le dispositif de commande (19) contrôle au moins deux arbres moteurs lors du démarrage et lors de l'arrêt de l'engrenage (1) dépendant du temps et/ou de la course.

3. Engrenage selon les revendications 1 ou 2, **caractérisé en ce que** le dispositif de commande (19) est équipé d'un couplage maître/esclave pour les deux dispositifs de commandes (3A, 3B) resp. les deux arbres moteurs (2A, 2B); un des dispositifs d'entraînement resp. un des arbres moteurs étant le maître, l'autre dispositif d'entraînement resp. l'autre arbre moteur étant l'esclave du dispositif de commande (19) qui commande l'engrenage (1).

4. Engrenage selon une des revendications précédentes, **caractérisé en ce que** les axes (5A, 5B) des arbres moteurs (2A, 2B), ainsi que les axes des arbres de transmission (10A, 10B, 13A, 13B) et l'arbre moteur (14) sont arrangés parallèlement l'un à l'autre.

5. Engrenage selon une des revendications précédentes, **caractérisé en ce qu'**un couple de roues dentées entre les pignons d'entraînement (13A, 13B) et la roue de sortie (15) est construit chacun en tant que paire de roues extérieures ou intérieures.

6. Engrenage selon une des revendications précédentes, **caractérisé en ce qu'**un couple de roues dentées entre les roues dentées de répartition de charge et les roues intermédiaires est construit chacun en tant que paire de roues extérieures ou intérieures.

7. Engrenage selon une des revendications précédentes, **caractérisé en ce que** sur chaque arbre moteur (2A, 2B) une roue de répartition de charge d'une denture droite ou hélicoïdale (6A, 6B) est montée dans le sens opposé, chaque roue dentée de répartition de charge s'engrenant sur chaque roue intermédiaire (8A, 8B; 12A, 12B) située à un bout des deux arbres de transmission (7A, 7B; 11A, 11 B).
